# EUROPEAN PATENT SPECIFICATION

(11) **EP 1 511 908 B1**
(45) Date of publication and mention of the grant of the patent: **17.05.2006**
(21) Application number: 03733731.8
(22) Date of filing: 11.06.2003
(51) Int. Cl.: E04G 15/06

(54) **INSCREED BOX FOR ELECTRICAL FLOOR INSTALLATIONS**
ESTRICHBÜNDIGER KASTEN FÜR ELEKTRISCHE BODENINSTALLATIONEN
BOITE ENFOUIE DESTINEE AUX INSTALLATIONS ELECTRIQUES AU SOL

(30) Priority: 11.06.2002 SE 0201808
(43) Date of publication of application: 09.03.2005
(73) Proprietor: THORSMAN & CO AB, 611 29 Nyköping (SE)
(72) Inventor: ERIKSSON, Staffan, S-611 56 Nyköping (SE); WESTLIN, Stefan, S-613 35 Oxelösund (SE); LUNDBLAD, Martin, S-613 37 Oxelösund (SE)
(74) Representative: Hopfgarten, Nils
(86) International application number: PCT/SE2003/000979
(87) International publication number: WO 2003/104587

(56) References cited:
- DE-A1- 19 922 646
- FR-A1- 2 789 711
- US-A- 5 496 213
- US-A- 6 088 972

## Description

### TECHNICAL FIELD

The invention refers to an inscreed box for electrical floor installations, as disclosed in FR 2 789 711 A1.

### BACKGROUND ART

Such inscreed boxes are used in cast concrete floors in e.g. offices which floors comprises cable ducts with cables for e.g. distribution of electrical power and data to defined positions on the floor. In these defined positions is then in the inscreed box mounted e.g. an insert in the form of floor box provided with a cover comprising electrical outlets of different types connected to said cables. Outlet units for power and data could also be mounted standing on top of such an inscreed box.

Inscreed boxes of this type are previously known which boxes comprise a lower box with a bottom part and vertical side walls and an associated upper part in the form of a frame which before the casting process by means of adjusting the height could be adapted to different levels of the upper concrete surface. Typically the adjustment of the height is made on the spot. In order to avoid that water and concrete is entering the box at the casting process the joint between the box and the frame is then covered with an adhesive tape. The installer thus has to bring along a tape to the spot.

When the concrete has hardened these inscreed boxes are impossible to readjust if this should turn out to be desirable as the concrete has hardened against the box as well as the frame.

### SUMMARY OF THE INVENTION

One object of the present invention is to provide an inscreed box for electrical installations which is leakproof i.e. stops water from the surrounding concrete to enter the box at the casting. The box according to the invention is furthermore adjustable in height before as well as after the casting. Sealing on the spot e.g. by means of application of a tape over the joint between the box formed part and the frame will not be necessary to carry out.

The invention is characterised according to the enclosed claims.

### DESCRIPTION OF THE DRAWINGS

Further objects and advantages with the invention will be apparent from the following description which is given with reference to the appended drawings on which:
Figure 1 shows in a perspective view a first embodiment of the inscreed box according to the invention.
Figure 2 shows in section a portion of the box according to figure 1 after the casting.
Figure 3 shows in section a portion of a box according to a second embodiment after the casting.
Figure 4 shows in section a portion of a box according to a third embodiment after the casting.

### PREFERRED EMBODIMENTS

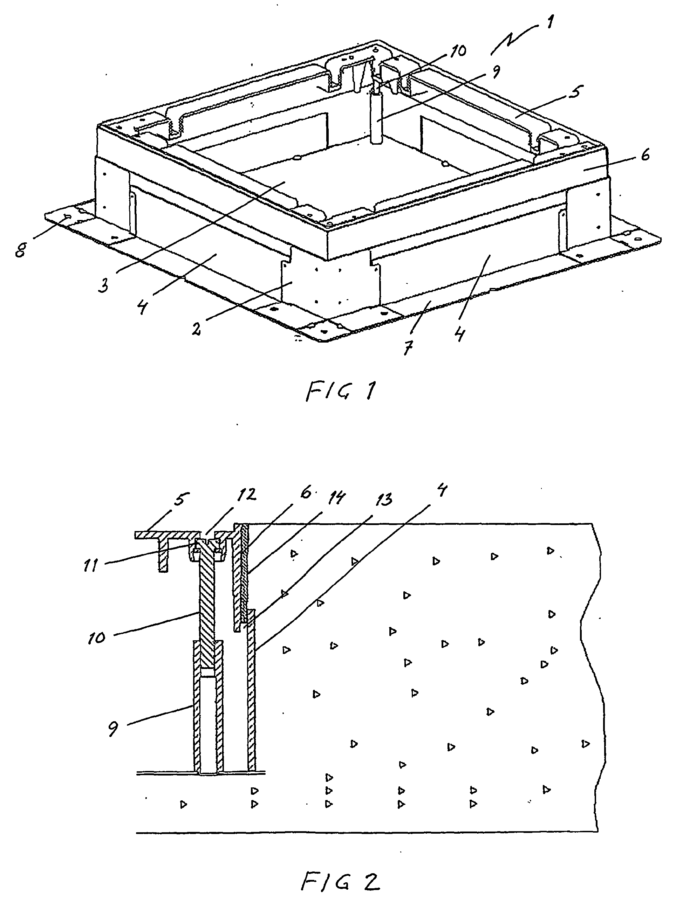

Figure 1 shows in a perspective view a first embodiment of the inscreed box according to the invention.

The inscreed box 1 has two main parts, a lower box formed part 2 comprising a base portion 3 and vertical side walls 4 and an upper frame 5 also provided with vertical side walls 6 arranged adjustable in height in relation to the box formed part 2.

During the casting the box 1 will be exposed to considerable forces directed upwards depending on the hydrostatic pressure in the concrete. The box therefore has to be fixed and well anchored. The lower part 2 is therefore provided with a flange 7 all around. This flange is provided with arrangements for fixing and anchoring e.g. holes 8 for screws or nails or lashing wire. The box could e.g. be fixed with distance elements towards the form and be lashed onto the concrete reinforcement. The side walls 4 could be provided with breakable parts or openings for adapters (not shown) for connection to the cable ducts. The whole box is usually earthed by means of electrical connection to an incoming earth wire.

The frame 5 could advantageously be manufactured in moulded aluminium having support surfaces and fixing arrangements for different inserts in the form of floor boxes or similar. In order to make it possible to adjust the frame 5 in relation to the lower part 2 an adjustment device 9, 10 is in the shown example arranged in each corner of the box. The details of this arrangement are better visible in figure 2.

In the base portion 3 is fixed an intemally threaded connection piece 9 which cooperates with a screw 10 the head of which is freely rotating fixed to the frame. The groove of the screw head is accessible from above by means of e.g. a screwdriver through a hole 12 in the frame. By means of an adjustment device of this type in each corner of the box the desired level adjustment could obviously be carried out. Other embodiments of the adjustment device are of course also imaginable.

According to the inventive idea a sealing arrangement for sealing between the two main parts 2, 5 of the inscreed box and an arrangement for providing release between the frame 5 and the hardened concrete are also provided. Different embodiments of these arrangements are shown in the figures 2 to 4.

Figure 2 shows in section a portion of the box according to figure 1 after the casting.

In a first embodiment the inscreed box has been designed so that the frame has smaller external dimensions and the vertical side walls 4 of the base portion of the box and corresponding side walls 6 of the associated frame leaves a slot 13 open along the periphery of the box.

All around on the frame 5 of the box a compressible rim 14 is arranged such that it covers the portions of the vertical side walls 6 of the frame 5 which could be exposed to the concrete and fills the slot 13 between the frame and the box in mounted position. The rim 14 could e.g. made of a material such as neoprene or similar fixed against the frame 5 by means of double sided tape, direct gluing or in a corresponding way.

With this arrangement a good sealing in the slot 13 against concrete and water during the casting is achieved. Due to the fact that the concrete is not hardening in contact with the frame 5 but against the outside of the compressible rim 14 it will afterwards when the concrete has hardened be possible to readjust the height of the frame 5 upwards as well as downwards in relation to the box 2 if this turns out to be necessary. At such a readjustment it is possible that the sealing function of the rim deteriorates but this does not matter any longer because the concrete has already hardened and the risk of penetrating water and/or concrete does not exist any longer.

This arrangement with a compressible coating covering the vertical side walls 6 of the frame 5 which could be exposed to the concrete and reaches down into the slot 13 to at least a part of the depth of the slot obviously solves the problems with simultaneous sealing and adjustability also after the casting.

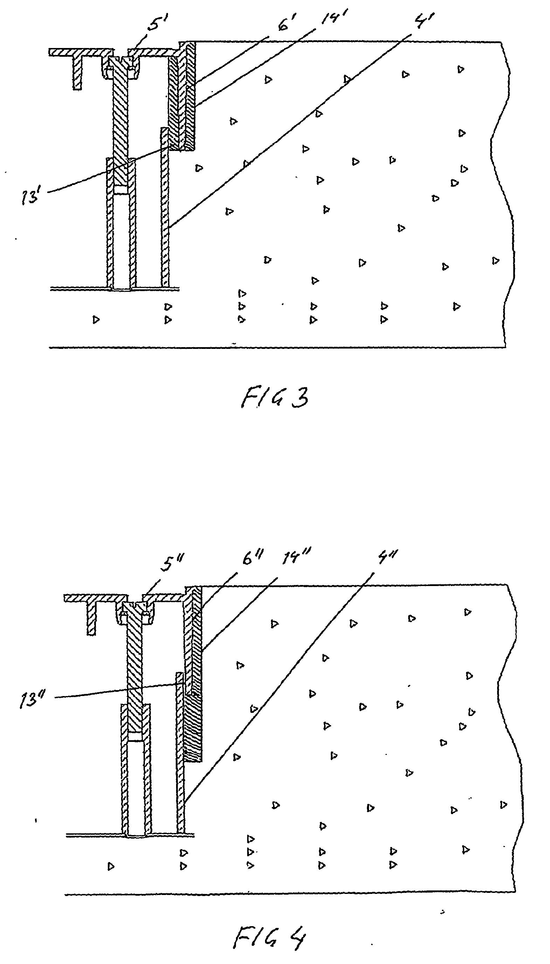

Figure 3 shows in section a portion of a box according to a second embodiment after the casting.

In this embodiment the frame 5' has been given such dimensions that its sidewalls 6' are reaching outside the side walls 4' of the box. Also in this example the vertical side walls 6' of the frame have been provided on the outside with a coating 14' of e.g. a compressible material of the same type as described above but which in this case will not have any sealing function.

The role of this coating is as before to prevent the concrete from hardening in contact with the frame 5' and to provide the release function between the hardened concrete and the frame 5' so that this frame could be adjusted afterwards. It is therefore understood that the release between the hardened concrete and the frame also can be achieved in another way. The coating could e.g. have the form of a double plastic film fixed against the frame in the same way as earlier described.

The sealing function in this embodiment could be achieved as described above, i.e. by means of a compressible material in the slot 13' between the vertical walls. The material could be glued against the inside of the vertical wall of the frame as shown in the figure 3.

At the casting with a box of this design the hardened concrete will create a shoulder below the vertical side wall 6' of the frame. Therefore a readjustment of the position of the frame downwards will be impossible. The effect of this drawback could however be eliminated in that the frame at the coarse adjustment before the casting deliberately is adjusted low. It could be noted that for this embodiment the hydrostatic pressure in the concrete tends to improve the sealing effect as the material in the slot between the side walls will be compressed.

Figure 4 shows in section a portion of a box according to a third embodiment after the casting.

In this embodiment too the frame 5" has been given such dimensions that its side walls 6" are outside the sidewalls 4" of the box but the slot 13" has advantageously been made smaller. The sealing in this embodiment does not take place in the slot.

The combined sealing and release function is provided by a profiled rim 14" having a L-formed section, preferably but not exclusively made of a compressible homogeneous material which can be mounted on the outside of the inscreed box. The vertical leg in the L covers the outside of the vertical side wall 6" of the frame and the horisontal leg is designed so that it connects to and bears against the vertical side wall 4" of the box over a larger or smaller surface. Preferably the rim is only glued against the frame. This means that at the coarse adjustment before the casting the horisontal leg with a smaller contact pressure against the side wall of the box follows the movement. During the casting the hydrostatic pressure in the concrete will press the horisontal leg against the side wall 4" of the box at which a good sealing against concrete and water is achieved.

After the hardening of the concrete an adjustment of the level of the frame could obviously be carried out upwards as well as downwards. The horisontal leg of the L defines a cavity in the hardened concrete filled up with the compressible material of the rim which thus will not stop a movement downwards of the vertical side wall of the frame.

## Claims

1. Inscreed box (1) for electrical installations in concrete floors which comprise cable ducts with cables for distribution of electrical power and data to defined positions on the floor in which positions such a box is intended to be integrated in the cast concrete, comprising a lower box formed part (2) having a base portion (3) and vertical side walls (4, 4', 4") and an upper frame (5, 5', 5") also provided with vertical side walls (6, 6', 6") arranged adjustable in height in relation to the box formed part (2) which frame is provided with fixing arrangements for different inserts, **characterised in that** the box (1) comprises an arrangement for sealing between the box formed part (2) and the upper frame (5, 5', 5") and an arrangement for providing release between the frame (5, 5', 5") and the hardened concrete.

2. Inscreed box according to claim 1, **characterised in that** said arrangement for providing release between the frame (5, 5', 5") and the hardened concrete comprises a rim (14, 14', 14") of compressible material which covers the portions of the vertical side walls (6, 6', 6") of the frame (5, 5', 5") which could be exposed to the concrete at the casting process.

3. Inscreed box according to claim 1, **characterised in that** said arrangement for providing release between the frame (5, 5', 5") and the hardened concrete comprises a double plastic film which covers the portions of the vertical side walls (6, 6', 6") of the frame (5, 5', 5") which could be exposed to the concrete at the casting process.

4. Inscreed box according to any of the claims 1 to 3, **characterised in that** said vertical side walls (4, 4', 4") and said vertical side walls (6, 6', 6") define a slot (13, 13') which reaches around the inscreed box (1) and that said arrangement for sealing between the box formed part (2) and the upper frame (5, 5', 5") comprise a rim of compressible material which fills said slot at least to part of its depth in mounted position.

5. Inscreed box according to claims 2 and 4, **characterised in that** said arrangement for providing release and said arrangement for sealing is constituted by one and the same rim.

6. Inscreed box according to any of the claims 2, 4 or 5, **characterised in that** said rim for providing release is made of neoprene or similar and is fixed against the frame (5, 5', 5") by means of double sided tape, direct gluing or in a corresponding way.

7. Inscreed box according to any of the claims 1, 2 or 4, **characterised in that** said vertical side walls 6' are positioned outside said vertical side walls 4'.

8. Inscreed box according to claim 7, **characterised in that** it is provided with a profiled rim (14") having a L-formed section, made of a compressible homogeneous material at which its vertical leg is fixed against and covering the outside of the vertical side wall (6") of the frame (5") and the horisontal leg is designed so that it connects to and bears against the vertical side wall (4") of the box over a larger or smaller surface.

## Patentansprüche

1. Unterflurdose (1) für Elektroinstallationen in Betonböden, die Kabelkanäle mit Kabeln zur Verteilung von elektrischer Energie und von Daten zu festgelegten Stellen im Boden umfassen, an welchen Stellen solch eine Dose in den Gussbeton eingebaut werden soll, ein unteres Dosenformteil (2) mit einem Grundabschnitt (3) und vertikalen Seitenwänden (4, 4', 4"), und einen oberen Rahmen (5, 5', 5") umfassend, der auch mit vertikalen Seitenwänden (6, 6', 6") versehen ist, die höhenverstellbar bezüglich des Dosenformteils (2) angeordnet sind, welcher Rahmen mit Befestigungseinrichtungen für verschiedene Einsätze versehen ist, **dadurch gekennzeichnet, dass** die Dose (1) eine Einrichtung zum Abdichten zwischen dem Dosenformteil (2) und dem oberen Rahmen (5, 5', 5") und eine Einrichtung umfasst, um eine Entlastung zwischen dem Rahmen (5, 5', 5") und dem gehärteten Beton vorzusehen.

2. Unterflurdose nach Anspruch 1, **dadurch kennzeichnet, dass** die Einrichtung zum Vorsehen einer Entlastung zwischen dem Rahmen (5, 5', 5") und dem gehärteten Beton eine Einfassung (14, 14', 14") aus komprimierbarem Material umfasst, das die Teile der vertikalen Seitenwände (6, 6', 6") des Rahmens (5, 5', 5") bedeckt, die beim Gießprozess dem Beton ausgesetzt sein könnten.

3. Unterflurdose nach Anspruch 1, **dadurch kennzeichnet, dass** die Einrichtung zum Vorsehen einer Entlastung zwischen dem Rahmen (5, 5', 5") und dem gehärteten Beton eine doppelte Kunststofffolie umfasst, die die Teile der vertikalen Seitenwände (6, 6', 6") des Rahmens (5, 5', 5") bedeckt, die beim Gießprozess dem Beton ausgesetzt sein könnten.

4. Unterflurdose nach einem der Ansprüche 1 bis 3, **dadurch kennzeichnet, dass** die vertikalen Seitenwände (4, 4', 4") und die vertikalen Seitenwände (6, 6', 6") einen Schlitz (13, 13') bilden, der um die Unterflurdose (1) verläuft, und dass die Einrichtung zum Abdichten zwischen dem Dosenformteil (2) und dem oberen Rahmen (5, 5', 5") eine Einfassung aus komprimierbarem Material umfasst, das in der Einbauposition den Schlitz zumindest bis zu einem Teil seiner Tiefe füllt.

5. Unterflurdose nach Anspruch 2 und 4, **dadurch kennzeichnet, dass** die Einrichtung zum Vorsehen von Entlastung und die Einrichtung zum Abdichten aus ein und derselben Einfassung besteht.

6. Unterflurdose nach einem der Ansprüche 2, 4 oder 5, **dadurch kennzeichnet, dass** die Einrichtung zum Vorsehen von Entlastung aus Neopren oder dergleichen besteht und am Rahmen (5, 5', 5") mittels eines direkt oder auf entsprechende Weise klebenden doppelseitigen Bands befestigt ist.

7. Unterflurdose nach einem der Ansprüche 1, 2 oder 4, **dadurch kennzeichnet, dass** die vertikalen Seitenwände (6') außerhalb der vertikalen Seitenwände (4') angeordnet sind.

8. Unterflurdose nach Anspruch 7, **dadurch kennzeichnet, dass** sie mit einer profilierten Einfassung (14") mit einem L-förmigen Querschnitt versehen ist, die aus einem komprimierbaren homogenen Material besteht, an dem ihr vertikaler Schenkel befestigt ist, und das die Außenseite der vertikalen Seitenwand (6") des Rahmens (5") bedeckt, und der horizontale Schenkel so ausgelegt ist, dass er über eine größere oder kleinere Fläche an der vertikalen Seitenwand (4") der Dose angeschlossen und an ihr anliegend ist.

## Revendications

1. Boîtier encastré (1) destiné à des installations électriques dans des planchers de béton qui comprennent des conduits de câble avec des câbles destinés à une répartition d'un courant électrique et de données vers des positions définies sur le plancher, positions dans lesquelles l'intégration d'un tel boîtier est prévue dans le béton coulé, comprenant une partie (2) en forme de boîtier inférieur ayant une portion (3) de base et des parois latérales verticales (4, 4', 4") et un cadre supérieur (5, 5', 5") prévu également avec des parois latérales verticales (6, 6', 6") agencées afin d'être réglables en hauteur relativement à la partie (2) en forme de boîtier, lequel cadre est prévu avec des dispositifs de fixation destinés à différentes insertions, **caractérisé en ce que** le boîtier (1) comprend un dispositif de scellage entre la partie (2) en forme de boîtier et le cadre supérieur (5, 5', 5"), et un dispositif destiné à fournir un dégagement entre le cadre (5, 5', 5") et le béton durci.

2. Boîtier encastré selon la revendication 1, **caractérisé en ce que** ledit dispositif destiné à fournir un dégagement entre le cadre (5, 5', 5") et le béton durci comprend un rebord (14, 14', 14") d'un matériau compressible qui couvre les portions des parois latérales verticales (6, 6', 6") du cadre (5, 5', 5") qui pourraient être exposées au béton au cours du procédé de coulée.

3. Boîtier encastré selon la revendication 1, **caractérisé en ce que** ledit dispositif destiné à fournir un dégagement entre le cadre (5, 5', 5") et le béton durci comprend un film de plastique double qui couvre les portions des parois latérales verticales (6, 6', 6") du cadre (5, 5', 5") qui pourraient être exposées au béton au cours du procédé de coulée.

4. Boîtier encastré selon l'une quelconque des revendications 1. à 3, **caractérisé en ce que** lesdites parois latérales verticales (4, 4', 4") et lesdites parois latérales verticales (6, 6', 6") définissent une fente (13, 13') qui atteint le tour du boîtier encastré (1) et **en ce que** ledit dispositif de scellage entre la partie (2) en forme de boîtier et le cadre supérieur (5, 5', 5") comprend un rebord d'un matériau compressible qui emplit ladite fente au moins jusqu'à une partie de sa profondeur en position montée.

5. Boîtier encastré selon les revendications 2 et 4, **caractérisé en ce que** ledit dispositif destiné à fournir un dégagement et ledit dispositif de scellage sont constitués par le même rebord.

6. Boîtier encastré selon l'une quelconque des revendications 2, 4 ou 5, **caractérisé en ce que** ledit rebord destiné à fournir un dégagement est fait de néoprène ou un matériau similaire et est fixé contre le cadre (5, 5', 5") au moyen d'une bande double face, d'un collage direct ou d'une manière correspondante.

7. Boîtier encastré selon l'une quelconque des revendications 1, 2 ou 4, **caractérisé en ce que** lesdites parois latérales verticales 6' sont positionnées à l'extérieur desdites parois latérales verticales 4'.

8. Boîtier encastré selon la revendication 7, **caractérisé en ce que** ce dernier est prévu avec un rebord profilé (14") ayant une section en L, faite d'un matériau homogène compressible auquel sa patte verticale est fixée contre et couvre l'extérieur de la paroi latérale verticale (6") du cadre (5") et la patte horizontale est conçue de sorte qu'elle se raccorde à et s'appuie contre la paroi latérale verticale (4") du boîtier sur une surface plus grande ou plus petite.
